# FASCICULE DE BREVET EUROPEEN

(11) **EP 3 172 174 B1**
(45) Date de publication et mention de la délivrance du brevet: **02.12.2020**
(21) Numéro de dépôt: 15759860.8
(22) Date de dépôt: 23.07.2015
(51) Int. Cl.: C03B 33/033, C03B 33/04, C03B 33/023

(54) **PROCÉDÉ DE ROMPAGE D'UNE FEUILLE DE VERRE ET MACHINE ASSOCIEE**
VERFAHREN ZUM BRECHEN EINER GLASSCHEIBE UND MASCHINE ZU SEINER DURCHFÛHRUNG
METHOD FOR BREAKING A GLASS SHEET AND ASSOCIATED APPARATUS

(30) Priorité: 24.07.2014 FR 1457171
(43) Date de publication de la demande: 31.05.2017
(73) Titulaire: SAINT-GOBAIN GLASS FRANCE, 92400 Courbevoie (FR)
(72) Inventeur: DUMENIL, Thierry, 60280 Margny Les Compiegne (FR); BURELOUX, Dominique, 02300 Ognes (FR)
(74) Mandataire: Saint-Gobain Recherche
(86) Numéro de dépôt international: PCT/FR2015/052043
(87) Numéro de publication internationale: WO 2016/012725

(56) Documents cités:
- EP-A1- 1 647 533
- EP-A1- 1 647 534
- US-A- 2 302 174
- US-A- 4 487 350

## Description

La présente invention est relative au domaine du rompage d'une feuille de verre, plus particulièrement du rompage d'une forme complexe dans une feuille de verre.

Pour réaliser un tel rompage, deux opérations se succèdent :
- une opération préalable de traçage d'une ou plusieurs fissures superficielles à la surface du verre à l'aide, par exemple, d'une molette de verrier ou d'un laser ; ces fissures forment des lignes aux contours de la forme ; cette opération s'appelle l'opération de «découpe» ;
- une opération de propagation de la fissure superficielle initiale à travers l'épaisseur de la feuille de verre ; cette opération s'appelle l'opération de «rompage» et permet de séparer la forme que l'on veut découper de l'échantillon de verre initial, appelé primitif.

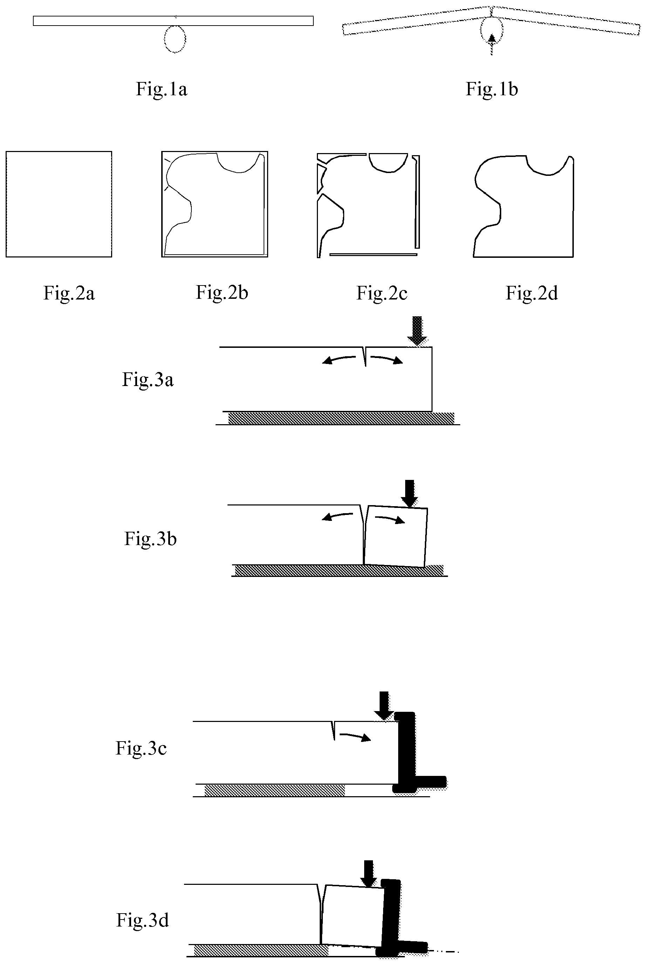

Il existe actuellement deux techniques de rompage de verre, en fonction de la complexité du volume à découper :
Pour les formes simples à bords rectilignes non pénétrants à l'intérieur de la forme (pas de concavité sur la forme), il est possible d'utiliser une technique de rompage inverse rectiligne, illustrée en Figures 1a & 1b. Il s'agit de réaliser une découpe rectiligne traversante, c'est-à-dire d'un bord à l'autre (Fig.1a), puis de mettre l'ensemble de la fissure en extension par soulèvement de la feuille de verre sur toute la longueur de la fissure, au moyen d'une barre (Fig.1b) ou d'un ou plusieurs contacts ponctuels.

Néanmoins, ce procédé ne permet pas de découper des formes complexes. Pour les formes de contours non rectilignes, on travaille à partir d'une feuille de verre de dimensions plus grandes que la forme à découper. Cette feuille s'appelle le primitif et a généralement la forme d'un trapèze. Les différentes étapes de découpe sont illustrées sur les Figures 2a - 2d.

On part d'un primitif ayant la forme d'un carré (Fig.2a), d'un rectangle ou d'un trapèze.

On trace, par exemple à l'aide d'une molette de verrier, le contour de la forme à découper (Fig.2b). Des découpes complémentaires sous forme de segments droits sont disposées en périphérie de la forme à découper. Ces segments s'appellent les traits additionnels et permettent un bon rompage de la partie du primitif située en dehors de la forme à découper.

Un rompage en plusieurs étapes de la partie du primitif située en dehors de la forme à découper conduit à l'obtention de différents morceaux appelés « chutes » autour de la forme complexe à découper (Fig.2c).

La forme à découper est ensuite isolée des chutes du primitif (Fig.2d).

Dans le cas de découpe de formes complexes décrit ici, le rompage s'effectue par une technique de mise en flexion locale de la fissure initiale par appui sur la chute ou bien par préhension de la chute. La mise en flexion se fait par un mécanisme de bras de levier en appuyant sur la feuille de verre, à l'extérieur de la forme et en un nombre de points limité, sur un revêtement dur ou mou.

Les figures 3a à 3d sont des schémas en section du rompage d'une feuille de verre par mise en flexion d'une fissure initiale de forme complexe à l'aide d'une mise en flexion de la partie extérieure à la forme à découper.

Les figures 3a et 3b concernent le cas du rompage sur un tapis souple. Une force est appliquée sur la chute par appui jusqu'à rupture et séparation de la chute.

Sur les figures 3c et 3d, il s'agit de l'exemple du rompage sur un tapis dur. La feuille de verre est placée en porte à faux de façon à ce qu'une force appliquée sur la chute par appui ou préhension, permette de déformer la feuille de verre jusqu'à rupture.

Néanmoins, ces techniques présentent plusieurs inconvénients.

Dans le cas des figures 3c et 3d, il existe une perte d'une surface de verre sacrificielle nécessaire à la mise en porte à faux lors du rompage.

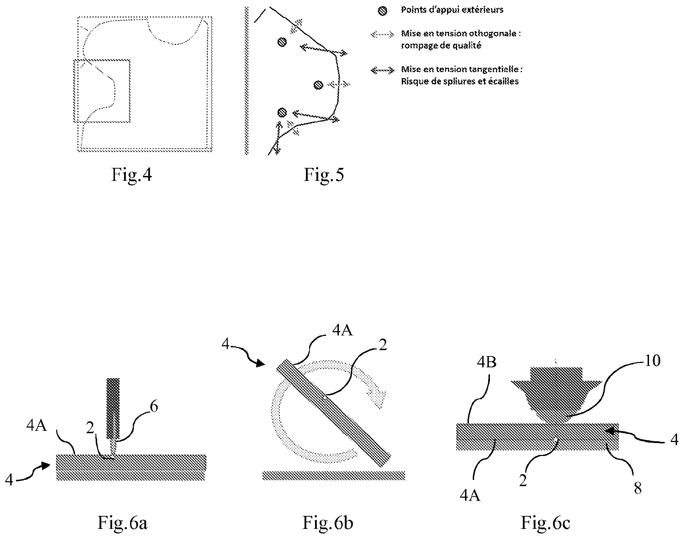

En outre, il peut exister des problèmes de qualité de découpe des formes complexes, car lorsque l'on applique un appui sur la chute, il n'est généralement pas possible de créer une contrainte de flexion en tout point de la ligne de découpe. C'est notamment le cas pour les formes rentrantes (concaves sur la forme à découper). Dans ce cas-là, il est possible de mettre en flexion le verre à l'entrée de la partie concave, mais dès que la fissure s'est un peu propagée, et avant que l'on ait pu relever l'outil qui exerce l'appui, le champ de contraintes en tête de fissure est modifié par la géométrie du trait de découpe. La flexion pure qui s'exerçait au départ de la partie concave se transforme rapidement en contrainte de cisaillement et génère des écailles. Dans les cas de formes avec faible rayon, la fissure peut se propager en dehors du trait de découpe initial et générer des rebuts. Cette situation est schématisée sur les figures 4 et 5.

De tels procédés sont connus de US2302174, EP1647534 et US4487350.

Un réglage des points d'appui peut résoudre ce problème mais cela reste une difficulté.

Qui plus est, il en résulte une limitation des formes complexes réalisables, en particulier dans le cas des géométries avec petits rayons de courbure concaves (zones incurvées profondes) où il est difficilement possible de placer convenablement un point d'appui.

Ces difficultés rendent le rompage des formes concaves particulièrement délicat. Si le rayon de courbure est faible, les réglages des positions et des efforts des points d'appui deviennent longs et délicats. En production, le rompage de ces géométries est souvent sensible à la moindre variation de paramètres de travail et peut générer de nombreux rebuts. Par ailleurs, la propension du champ de contraintes en tête de fissure à passer d'un mode de flexion pure à un mode de cisaillement est exacerbée lorsque l'épaisseur de verre augmente. Les formes rentrantes sont ainsi réputées très difficiles à exécuter pour du verre épais de 3,85 ou 5 mm.

Un but de l'invention est de faciliter la découpe de formes complexes dans des feuilles de verre. A cet effet, l'invention a pour objet un procédé de rompage d'une forme complexe dans une feuille de verre, tel que défini dans la revendication 1.

Ce procédé permet de réduire la surface de verre sacrificielle entre deux volumes. On peut même concevoir de découper plusieurs pièces à partir d'une feuille de verre de grande taille avec des pièces qui peuvent se toucher en certains points. On peut alors envisager une découpe avec une imbrication maximale des formes et une réduction très importante des chutes.

En effet, il n'est pas nécessaire de créer un primitif de forme carrée, rectangle ou trapézoïdale proche de la forme complexe à obtenir. Il est possible de découper la forme complexe directement dans la feuille de grand format dans laquelle plusieurs formes complexes pourront être découpées. Ceci autorise une optimisation des positions des formes complexes dans la feuille de verre, et ainsi une réduction du coût de la matière première « verre ».

Il est également possible de créer des primitifs dont certains bords sont prêts à façonner et de forme complexe tandis que la mise en forme des autres bords est réalisée lors de la deuxième étape de découpe. D'une manière générale, il s'agit de réaliser tout ou partie des bords de forme complexe dès la première étape de découpe sur la ligne de production.

Il est encore possible de réaliser la mise en forme de tous les bords lors de la deuxième étape de découpe, c'est-à-dire de continuer à découper dans un premier temps des primitifs dont les bords ne sont pas prêts à façonner, mais en prévoyant des largeurs de « trim » moins importantes qu'auparavant.

Des découpes plus complexes peuvent également être réalisées, particulièrement des découpes « rentrantes » et pour des verres épais, et avec un bon rendement.

Le réglage de la position étant liée au contour, le réglage de la position des appuis est également plus simple.

En outre, cette technique de rompage peut être intégrée sur une ligne existante.

On peut prévoir qu'une contre-force s'oppose à la force d'application du moyen d'appui local lors de l'étape de rompage.

Selon l'invention, un moyen d'appui-plan est positionné côté trait de découpe, face au moyen d'appui local lors de l'étape de rompage.

Dans ce cas, le moyen d'appui plan forme un contre-appui générant une contre-force s'opposant à la force d'application du moyen d'appui local lors de l'étape de rompage.

Selon une variante non revendiquée, la contre-force peut résulter du poids de la feuille de verre elle-même, lorsque celui-ci est suffisamment important.

Selon l'invention, l'étape de traçage et l'étape de rompage sont réalisées sans retournement intermédiaire de la feuille de verre. Autrement dit, selon un exemple, le trait de découpe est réalisé par le haut à la surface du verre, et le moyen d'appui local est appliqué par le bas sur la face opposée du verre, ou vice versa. La feuille de verre n'est pas renversée entre les deux étapes.

Suivant d'autres modes particuliers de réalisation, le procédé présente en outre l'une ou plusieurs des caractéristiques suivantes, prise(s) seule(s) ou suivant toutes les combinaisons techniquement possibles :
- le moyen d'appui local est monté roulant pour rouler sur la feuille de verre ;
- le moyen d'appui local est une bille ou une roulette de préférence arrondie ;
- le moyen d'appui local est appliqué avec une force d'appui choisie en fonction du rayon de courbure locale de la forme à découper ;
- le moyen d'appui local est appliqué en appui continu le long du trait de découpe ;
- le moyen d'appui local est appliqué avec une force ayant au moins une composante périodique ;
- le procédé utilise une table aspirante pour moyen d'appui-plan, la table aspirante portant la feuille de verre par aspiration de la face supérieure de la feuille de verre, pendant l'étape de rompage ou de découpe ;
- le procédé est utilisé pour découper au moins deux formes complexes imbriquées et/ou tangentes, dans la même feuille de verre.

L'invention a également pour objet un procédé de fabrication d'une pluralité de vitrages de forme complexe à partir d'une feuille de verre flotté rectangulaire de grandes dimensions ayant au moins une dimension correspondant à la largeur du ruban de verre flotté à partir duquel elle est produite, utilisant le procédé selon l'une quelconque des revendications précédentes pour découper au moins une partie desdits vitrages.

Suivant un mode particulier de réalisation, le procédé de fabrication comprend :
- sur un premier poste de découpe de ladite feuille de verre, une étape de traçage d'au moins un trait de découpe correspondant à au moins un bord prêt à façonner des vitrages,
- une première étape de rompage,
- sur un deuxième poste de découpe, une étape de traçage d'au moins un trait de découpe correspondant à au moins un autre bord prêt à façonner des vitrages ;
- une deuxième étape de rompage.

Suivant un autre mode de réalisation particulier, le procédé comprend :
- sur un premier poste de découpe de ladite feuille de verre, le traçage de traits de découpe correspondant à l'ensemble des bords prêts à façonner des vitrages, et
- une étape de rompage desdits bords prêts à façonner.

Suivant des modes particuliers de réalisation, le procédé de fabrication présente en outre l'une ou plusieurs des caractéristiques suivantes, prise(s) seule(s) ou suivant toutes les combinaisons techniquement possibles :
- la précision de traçage des traits de découpe sur le premier poste de découpe est de +/- 0,2mm ;
- le deuxième poste de découpe intègre une étape de focalisation précise à +/-0,1mm ;
- sur le premier poste de découpe, le trait de découpe est un trait rectiligne traversant la feuille de verre d'un bord à l'autre ;
- sur le premier poste de découpe, le trait de découpe forme un bord prêt à façonner de plusieurs vitrages d'un même côté du trait de découpe ;
- sur le premier poste de découpe, le trait de découpe forme en outre un bord prêt à façonner de plusieurs vitrages de l'autre côté du trait de découpe ;
- de chaque côté du trait de découpe, les bords prêts à façonner sont le même bord des vitrages ;
- de chaque côté du trait de découpe, les bords prêts à façonner sont les bords opposés des vitrages ;
- la première étape de rompage forme un primitif pour chaque vitrage à fabriquer, la deuxième étape de rompage formant le vitrage prêt à façonner ;
- le procédé comprend au moins un poste de découpe supplémentaire, avec au moins une étape de rompage supplémentaire ;
- le procédé comprend, après l'étape de deuxième rompage, une étape de façonnage du vitrage ;
- le façonnage est un meulage ;
- on procède à deux étapes de meulage ;
- la feuille de verre de grand format a au moins une dimension d'au moins 2,9m.

L'invention a encore pour objet une machine de rompage d'une forme complexe dans une feuille de verre, tel que définie dans la revendication 13.

Selon l'invention, la machine de rompage comprend en particulier un moyen d'appui plan contre ladite première face de la feuille de verre, en regard du moyen d'appui local.

L'invention sera mieux comprise à la lecture de la description qui va suivre, faire uniquement à titre d'exemple non limitatif, en se référant aux figures suivantes :
- Les figures 6a-6c sont des vues schématiques en coupe verticale de différentes étapes d'un procédé selon un mode particulier de réalisation de l'invention ;
- Les Figures 7a-7c, 8a-8c, 9a-9c et 10a-10c sont également des vues schématiques en coupe verticale des étapes réalisées par quatre machines de rompage différentes ;
- Les Figures 11a et 11b illustrent un exemple de design de découpe permis par l'invention selon un premier exemple de ligne de production, les traits blancs représentant les bords suivant leur contour prêt à façonner et les traits pointillés le traçage des traits de découpe lors de la première étape de découpe sur la ligne.
- Les Figures 12a et 12b sont des vues analogues aux figures 11 a et 11b pour un autre exemple de ligne de production.

Les Figures 6a-6c illustrent schématiquement un procédé selon un mode particulier de réalisation de l'invention, consistant d'abord en une étape de traçage d'un trait 2 (ou « ligne ») de découpe, c'est-à-dire de création d'une fissure sur une première face 4A de la feuille de verre 4, suivie d'une étape de retournement de la feuille de verre, en vue d'une étape postérieure d'appui local en regard de la fissure, sur la face opposée 4B à la première face. Le trait de découpe tracé correspond par exemple au contour de la forme complexe à découper, sans traits supplémentaires.

A noter qu'on entend, dans tout le texte, par « forme complexe », une ligne courbe, ou succession de traits dont certains au moins ne sont pas rectilignes, ou traits rectilignes avec changements de direction formant au moins une partie concave.

On entend par deux formes imbriquées qu'une partie convexe de l'une empiète dans une partie concave de l'autre, i.e. le contour des deux formes ne peut pas être séparé par une droite.

On entend par deux formes tangentes qu'elles ont une partie commune à leur contour.

A noter également que la feuille de verre à découper est plane.

Le traçage du trait de découpe est par exemple réalisé au moyen d'une molette de verrier 6 ou de tout autre instrument de découpe adapté, tel que par exemple un laser. Le trait de découpe 2 est une fissure destinée à permettre le rompage suivant ce trait lors de l'étape de rompage. Il s'agit donc d'une découpe partielle, i.e. seulement sur une partie de l'épaisseur de la feuille de verre. C'est ce qu'on entend par « trait de découpe » dans tout le texte.

Avec ce procédé, comme expliqué ci-dessus, il est possible de supprimer tout ou partie des traits supplémentaires selon la méthode de l'art antérieur. En effet, les trait supplémentaires ne seront éventuellement nécessaires que pour ouvrir le contour afin d'extraire la forme et non plus pour faciliter le rompage des formes complexes.

Comme illustré sur la figure 6c, la première face 4A de la feuille de verre 4, sur laquelle le trait de découpe 2 a été réalisé, est appuyée sur une surface d'appui plan 8. Il s'agit par exemple d'un tapis souple. La déformabilité de la surface d'appui plan 8 est choisie de façon à contrôler le champ de contraintes exercé par le moyen d'appui local. Maîtriser le champ de contraintes permet de maîtriser la longueur de propagation de la fissure. Le but est que la fissure se propage à une longueur prédéterminée en fonction de la forme à découper. La longueur choisie pour la fissure sera d'autant plus petite que le rayon de courbure local est petit. Si la fissure se propage trop vite, la surface devra être choisie moins déformable ou la pression d'appui plus faible. Si la fissure se propage trop lentement, il faudra choisir une surface plus déformable ou une pression d'appui plus importante.

Pour une feuille de verre silico sodo calcique standard de type « Planilux » d'épaisseur 3,15mm, les paramètres étaient les suivants :
Paramètres de découpe :
   Molette : angle 150°, largeur =1mm, diamètre : 5mm
   Vitesse déplacement molette : 100m/min
   Force exercée sur le verre = 50N
   Pénétration molette dans le verre : 4/100mm
   Epaisseur verre : 3,15mm
Paramètres de rompage inverse :
   Outil de rompage : type roue, diamètre : 5mm, largeur : 1mm
   Vitesse de déplacement outil : 30 m/min
   Force exercée sur le verre = 70N
   Dureté revêtement du moyen d'appui plan : tapis en feutrine de dureté : 45-52 shores

Le moyen d'appui local 10 est par exemple une bille de tout type adapté, ou un autre moyen d'appui local de tout type adapté, par exemple une roulette, de préférence une roulette de forme torique. La bille a par exemple un diamètre de 1mm. En variante, le diamètre est choisi de tout type adapté, notamment jusqu'à 10, voire 20mm.

Le moyen d'appui local 10 est choisi de préférence rigide, par exemple en acier ou un matériau plastique adapté.

Le moyen d'appui local 10 est déplacé le long du trait de découpe, sur toute la longueur du trait de découpe, de préférence en exerçant une force d'appui continue, par exemple d'intensité constante. En variante cependant, l'appui est continu mais d'intensité variable, par exemple choisie en fonction du rayon de courbure local de la forme à découper et par exemple complétée par une variation d'intensité périodique, c'est-à-dire un appui vibrant. En variante encore, l'appui sur la feuille de verre est réalisé de façon discontinue.

Le moyen d'appui local est déplacé par rapport à la feuille de verre. A noter cependant qu'en variante, c'est la feuille de verre qui est déplacée, ou les deux. D'une manière générale, il s'agit d'un déplacement relatif du moyen d'appui local 10 par rapport à la feuille de verre 4.

La surface d'appui-plan 8 est par exemple formée par une table, et donc par une surface plane continue. Cependant, en variante, la surface d'appui-plan 8 pourrait ne pas être continue. Il pourrait s'agir par exemple de plusieurs appuis-plans obtenus par exemple par des morceaux de tables. Ce qui importe est qu'en regard du moyen d'appui local 10 soit prévu un appui-plan 8, c'est-à-dire un appui au moins deux fois plus large que l'appui exercé par le moyen d'appui local, et ce de façon à obtenir un rompage net.

A noter également que l'étape de retournement ne fait pas partie de l'invention. Il est possible d'utiliser par exemple une table aspirante pour soulever la feuille de verre 4 et ainsi appuyer le moyen d'appui local 10 par le dessous, la première face 4A de la feuille de verre étant alors contre la table aspirante. Ceci est expliqué plus en détail ci-dessous.

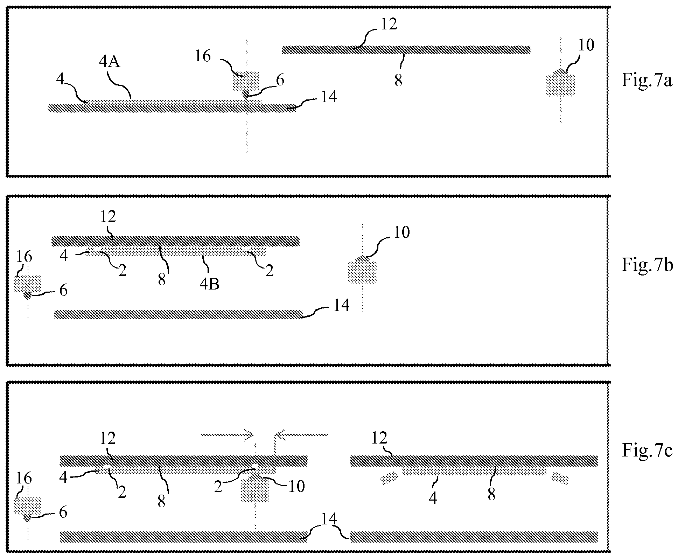

Les figures 7a-7c, 8a-8c, 9a-9c et 10a-10c illustrent schématiquement quatre types différents de machines permettant de mettre en œuvre le procédé.

La machine des Figures 7a-7c utilise une table aspirante 12.

Une feuille de verre 4 est convoyée jusqu'à une table de découpe 14 (Figure 7a). Une machine de découpe standard 16 peut alors être utilisée pour réaliser un trait de découpe 2 selon le contour de la forme complexe à obtenir.

La table aspirante 12 est par exemple amenée au-dessus de la table de découpe 14, comme illustré sur la figure 7b, de façon à aspirer la feuille de verre 4 par sa première face 4A.

Dans une troisième étape (Figure 7c), le moyen d'appui local 10 est amené contre la face opposée 4B de la feuille de verre 4, en regard du trait de découpe 2.

La table aspirante 12 peut également être configurée de façon à ce que les chutes tombent par gravité tandis que la ou les formes complexes qui ont été découpés restent aspirées par la table aspirante 12 et sont convoyées par elle plus loin, comme illustré sur le schéma de droite de la Figure 7c.

On conçoit cependant qu'il s'agit d'un simple exemple de machine et qu'il est possible d'envisager des variantes de tout type adapté.

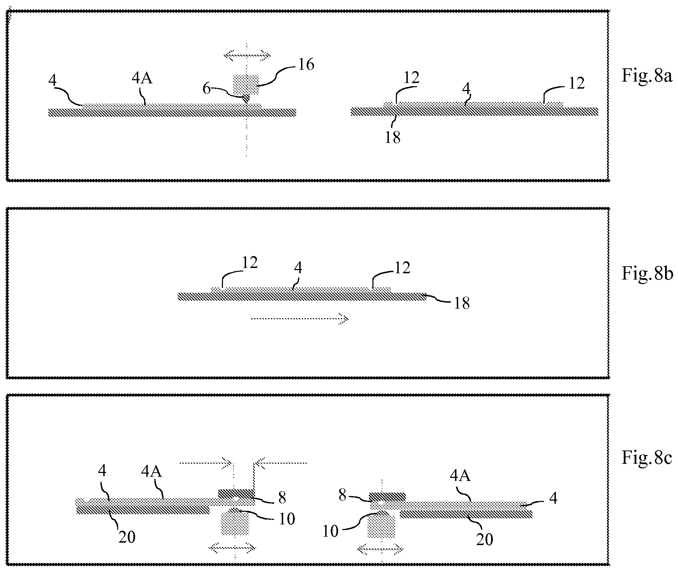

La machine possède au moins un calculateur et une mémoire sur laquelle sont stockés des programmes de commande de la machine. Les programmes sont aptes à commander la machine des Figures 7a-7c, plus particulièrement à commander l'outil de découpe 6, la table aspirante 12 et le moyen d'appui local 8. Il en est de même pour les autres machines des figures 8a-8c, 9a-9c et 10a-10c.

La machine des Figures 7a-7c présente l'avantage de ne pas nécessiter de transfert de la feuille de verre 4 sur un convoyeur avant rompage, et d'éviter ainsi un recalage géométrique pour connaitre la position du trait de découpe 2, de même qu'un gain de place.

Les Figures 8a-8c illustrent une machine comprenant quant à elle un convoyeur 18 de transfert de la feuille de verre de son lieu de découpe vers son lieu de rompage.

L'étape de découpe de la Figure 8a est analogue à celle de la Figure 7a. La Figure 8b illustre le transfert par le convoyeur 18 jusqu'au lieu de rompage.

La Figure 8c illustre l'étape de rompage. Pour éviter un retournement de la feuille de verre 4, une surface d'appui-plan 8 est appliquée contre la première face 4A. La face opposée 4B contre laquelle le moyen d'appui local 10 est appuyé est quant à elle en porte à faux de façon à ce que la zone correspondant au trait de découpe 2 soit dégagée de la table de support 20 portant la feuille de verre 4 par sa face dite opposée 4B.

En variante ne faisant pas partie de l'invention, il est bien entendu possible de prévoir un retournement de la feuille de verre 4 comme expliqué plus haut relativement au procédé. Cependant, une machine selon la Figure 8c permet également de choisir et d'adapter plus facilement la rigidité et la dureté du matériau d'appui plan 8.

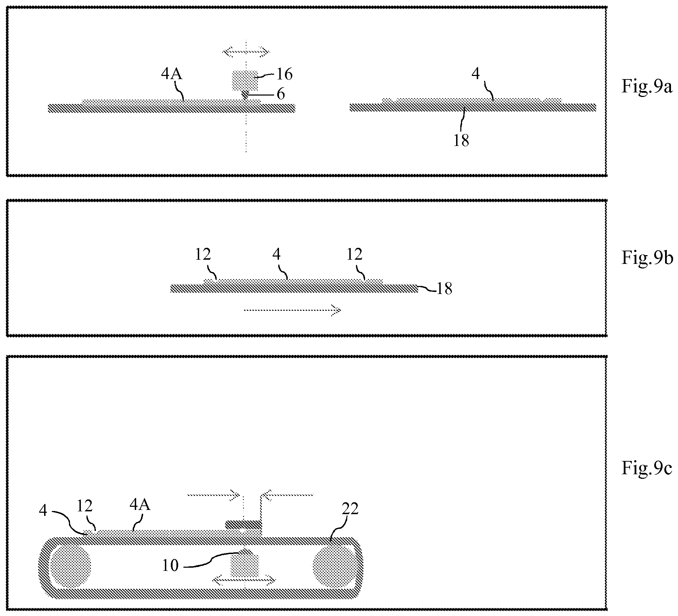

Les Figures 9a-9c illustrent une variante de l'exemple des Figures 8a-8c, variante dans laquelle le rompage est réalisé à travers un tapis souple de convoyage 22 de la feuille de verre. Il convient en effet de noter que le moyen d'appui local 10 ne nécessite pas d'être nécessairement en contact direct du verre.

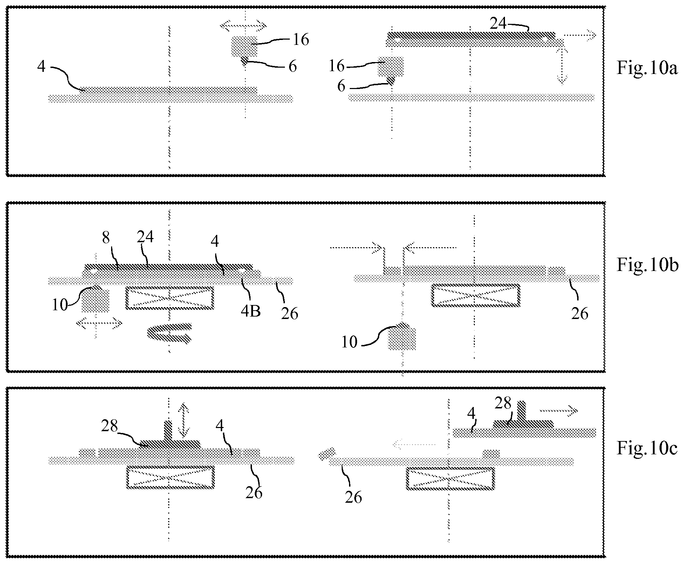

A noter également qu'en variante des Figures 8a-8c et 9a-9c, le transfert peut être effectué par une table aspirante 24. C'est d'ailleurs ce qu'illustre la Figure 10a.

Mais la machine des Figures 10a-10c diffère également des précédentes pour d'autres raisons. La principale différence tient à ce que la feuille de verre soit tournée pendant l'étape de rompage, tout en restant dans son plan, comme illustré par la Figure 10b. Il s'agit d'une rotation autour d'une perpendiculaire au plan général de la feuille de verre.

En outre, sur la Figure 10b, le plateau de support 26 de la feuille de verre 4 est suffisamment souple pour que le moyen d'appui local 10 puisse appuyer sur la face opposée 4B à travers le plateau de support 26 et ainsi rompre la feuille de verre complexe suivant le contour de la forme complexe. Un moyen d'appui-plan 8 est plaqué contre la première face 4A de la feuille de verre, de façon analogue à la Figure 8c.

Le moyen d'appui local 10 est par exemple monté mobile en deux dimensions seulement, grâce à la rotation de la feuille de verre 4.

La Figure 10c illustre la séparation de la forme complexe au moyen d'une table aspirante 28. En variante, il s'agit d'un autre moyen de tout type adapté.

La suite de la description vise à expliquer les avantages de l'invention sur les possibilités de configuration de la ligne de production.

Préalablement, il convient de rappeler ce qui suit.

Les découpes des vitrages de forme complexe, i.e. par exemple des vitrages de véhicule automobile, sont généralement réalisés en deux temps à partir d'une feuille de verre « grand format », également appelée « PLF » pour « Plateau Large Format » ou DLF.

Il s'agit de feuilles de verre dont au moins une dimension correspond à la largeur du ruban de verre flotté dont elles sont issues. Les « PLF » sont obtenus directement par découpe transversale dans le ruban de verre flotté. La largeur des PLF correspond à la largeur du ruban de verre flotté. Leur longueur correspond à la longueur de ruban découpé. Les DLF sont des feuilles de verre plus petites, dont la longueur correspond quant à elle à la largeur du ruban de verre flotté. Les DLF sont obtenus soit directement par découpe dans le ruban de verre flotté mais avec une longueur de ruban découpé inférieur à la largeur du ruban de verre flotté, ou bien obtenu par découpe du PLF transversalement à sa longueur. Ainsi, dans la pratique, les PLF ont des dimensions minimales d'au moins 2,9m par au moins 4,7m et les DLF des dimensions d'au moins 2,9m par au moins 1,3m.

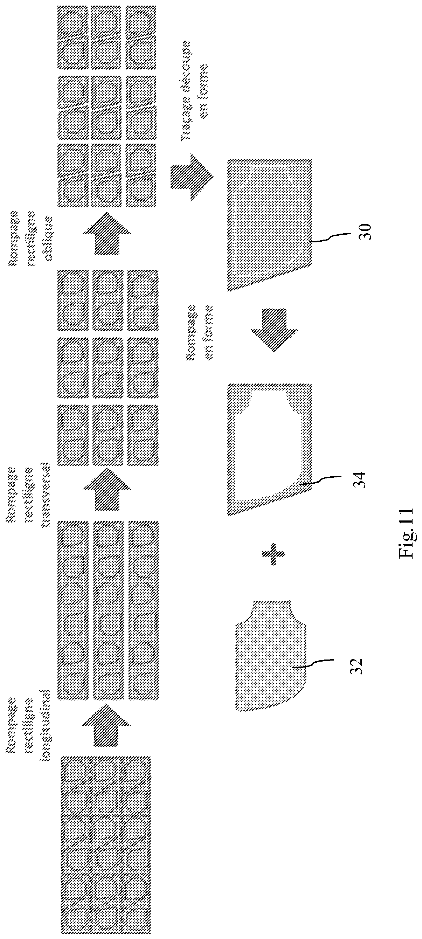

Pour fabriquer un vitrage de forme complexe, des étapes ultérieures de découpe sont nécessaires. On procède généralement dans un premier temps à la découpe dans les PLF ou DLF, de feuilles de verre de forme rectangulaire ou trapézoïdale 30, appelés « primitifs ». Il s'agit de feuilles de verre dont la forme est un polygone contenant le vitrage définitif de forme complexe 32 à réaliser tout en laissant sur tout le pourtour un « trim » 34 suffisant pour procéder au rompage. C'est ce qui est illustré sur la figure 11.

Dans un deuxième temps, on procède sur un deuxième poste de découpe à la mise en forme du vitrage à façonner, c'est-à-dire à la découpe des « trims » 34 sur tout le pourtour du primitif 30 de façon à ce que les bords du vitrage 32 soient désormais prêts à façonner. Pour cela, plusieurs traits de découpe sont par exemple réalisés comme illustré sur les figures 2a-2d pour un exemple de primitif carré. Un façonnage consistant en un meulage est ensuite réalisé ultérieurement.

La découpe des primitifs 30 dans les PLF ou DLF est ainsi effectuée sur un premier poste de découpe tandis que la mise en forme des vitrages prêts à façonner 34 est quant à elle réalisée sur un deuxième poste de découpe. Sur chaque poste de découpe on procède :
- au traçage de traits de découpe ; et
- au rompage le long des traits de découpe.

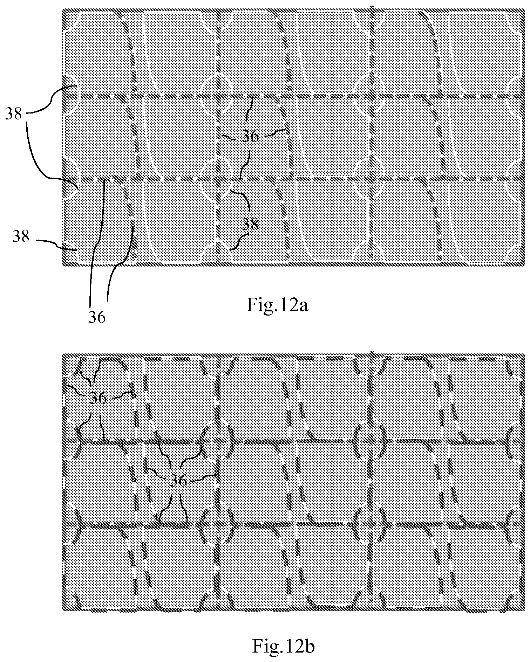

Les figures 12a-12b illustrent des exemples de design de découpe sur lesquels les traits continus représentent la forme à découper prête à façonner tandis que les traits pointillés représentent les traits de découpe réalisés sur le premier poste de découpe.

Comme illustré par les Figures 12a-12b, un avantage de l'invention est de permettre de réaliser des découpes d'au moins certains bords de forme complexe sur le premier poste de découpe, i.e. sur le poste de découpe du primitif 30. Découper des bords prêts à façonner sur le premier poste de découpe permet de réduire les chutes, en évitant de prévoir des « trims » sur ces bords.

Dans le cas de la figure 12a, certains bords 36 de forme complexe seulement sont découpés suivant leur forme complexe tandis que d'autres bords 38 ne le seront que lors de la deuxième étape de découpe sur le deuxième poste de découpe.

Dans l'exemple de la Figure 12b, la découpe en forme prête à façonner de tout le contour du vitrage est réalisée sur le premier poste de découpe (tout le contour est en traits pointillés 36).

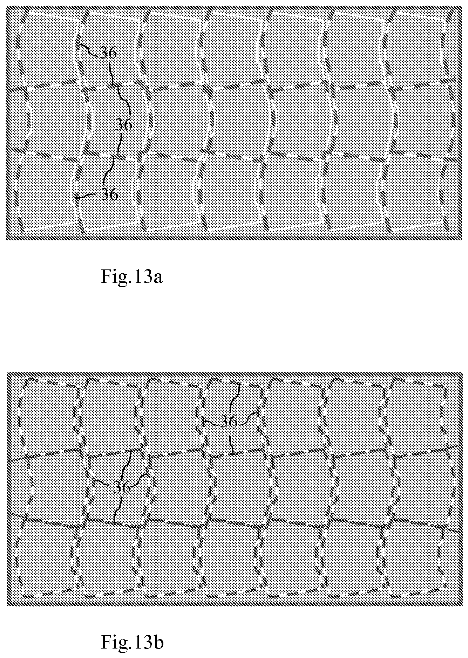

Les Figures 13a-13b illustrent un autre avantage de l'invention, à savoir permettre d'imbriquer des formes complexes à découper. Une telle configuration réduira aussi les chutes, comme on le comprend en voyant les figures 13a et 13b.

En outre, la découpe selon la forme prête à façonner peut, comme expliqué ci-dessus pour les figures 12a et 12b, commencer dès la première étape de découpe sur le premier poste de découpe. Sur la Figure 13a, deux des bords 36 sont découpés sur le premier poste de découpe, dit poste de découpe des « primitifs », même s'il ne s'agit plus de primitifs au sens strict.

Sur la Figure 13b, la découpe en forme prête à façonner sur tout le contour du vitrage est réalisée entièrement sur le premier poste de découpe, sans passage par l'étape de découpe de « primitifs », de façon analogue à la Figure 12b.

## Revendications

1. Procédé de rompage d'une forme complexe dans une feuille de verre (4), comprenant :
- une étape de traçage d'un trait de découpe (2) à la surface du verre, au moyen d'un outil de découpe (6);
- une étape de rompage au moyen d'un moyen d'appui local (10) appliqué en face opposée (4B) et en regard du trait de découpe (2), le moyen d'appui local (10) étant déplacé et appuyé le long du trait de découpe (2), sur ladite face opposée (4B),
le procédé étant **caractérisé en ce que** l'étape de traçage et l'étape de rompage sont réalisées sans retournement intermédiaire de la feuille de verre et **en ce qu'**un moyen d'appui-plan (8) est positionné côté trait de découpe (4A), face au moyen d'appui local (10) lors de l'étape de rompage.

2. Procédé selon la revendication 1, dans lequel le rompage est réalisé à travers un tapis souple (22) de convoyage de la feuille de verre.

3. Procédé selon la revendication 1 ou 2, utilisant une table aspirante pour moyen d'appui-plan (8), la table aspirante portant la feuille de verre (4) par aspiration de la face supérieure de la feuille de verre, pendant l'étape de rompage ou de découpe.

4. Procédé selon l'une quelconque des revendications précédentes, dans lequel le moyen d'appui local (10) est monté roulant pour rouler sur la feuille de verre (4).

5. Procédé selon l'une quelconque des revendications précédentes, dans lequel le moyen d'appui local (10) est une bille ou une roulette de préférence arrondie.

6. Procédé selon l'une quelconque des revendications précédentes, dans lequel le moyen d'appui local (10) est appliqué avec une force d'appui choisie en fonction du rayon de courbure locale de la forme à découper.

7. Procédé selon l'une quelconque des revendications précédentes, dans lequel le moyen d'appui local (10) est appliqué en appui continu le long du trait de découpe (2).

8. Procédé selon l'une quelconque des revendications précédentes, dans lequel le moyen d'appui local (10) est appliqué avec une force ayant au moins une composante périodique.

9. Procédé selon l'une quelconque des revendications précédentes, dans lequel le procédé est utilisé pour découper au moins deux formes complexes imbriquées et/ou tangentes, dans la même feuille de verre.

10. Procédé de fabrication d'une pluralité de vitrages de forme complexe à partir d'une feuille de verre flotté rectangulaire de grandes dimensions ayant au moins une dimension correspondant à la largeur du ruban de verre flotté à partir duquel elle est produite, utilisant le procédé selon l'une quelconque des revendications précédentes pour découper au moins une partie desdits vitrages.

11. Procédé selon la revendication précédente, comprenant :
- sur un premier poste de découpe de ladite feuille de verre, une étape de traçage d'au moins un trait de découpe correspondant à au moins un bord prêt à façonner des vitrages,
- une première étape de rompage,
- sur un deuxième poste de découpe, une étape de traçage d'au moins un trait de découpe correspondant à au moins un autre bord prêt à façonner des vitrages ;
- une deuxième étape de rompage.

12. Procédé selon la revendication 10, comprenant :
- sur un premier poste de découpe, le traçage de traits de découpe correspondant à l'ensemble des bords prêts à façonner des vitrages,
- une étape de rompage desdits bords prêts à façonner.

13. Machine de rompage d'une forme complexe dans une feuille de verre (4), comprenant :
- un outil de découpe (6) et des moyens de déplacement automatique dudit outil pour réaliser un trait de découpe perpendiculaire à la surface du verre sur une première face d'une feuille de verre ;
- un moyen d'appui local (10) et des moyens de déplacement automatique du moyen d"appui local et/ou de la feuille de verre par rapport à l'autre, la machine étant configurée pour appliquer le moyen d 'appui local contre la face opposée de la première face de la feuille de verre et le déplacer en regard et le long du trait de découpe de façon à rompre la forme complexe,
la machine étant **caractérisée en ce qu'**elle est configurée de sorte que la réalisation du trait de découpe et l'étape de rompage sont réalisées sans retournement intermédiaire de la feuille de verre, et **en ce qu'**elle comprend en outre un moyen d'appui plan (8) adapté pour être positionné contre ladite première face de la feuille de verre, en regard du moyen d'appui local, lors de l'étape de rompage.

## Patentansprüche

1. Verfahren zum Brechen einer komplexen Form in einer Glasscheibe (4), umfassend:
- einen Schritt des Markierens einer Schnittlinie (2) an der Oberfläche des Glases mittels eines Schnittwerkzeugs (6);
- einen Schritt des Brechens mittels eines an der gegenüberliegenden Fläche (4B) und der Schnittlinie (2) gegenüber aufgebrachten lokalen Auflagemittels (10), wobei das lokale Auflagemittel (10) auf der gegenüberliegenden Fläche (4B) entlang der Schnittlinie (2) verschoben und gedrückt wird,
wobei das Verfahren **dadurch gekennzeichnet ist, dass** der Schritt des Markierens und der Schritt des Brechens ohne dazwischenliegendes Umdrehen der Glasscheibe realisiert werden, und dadurch, dass bei dem Schritt des Brechens ein ebenes Auflagemittel (8) auf Seite der Schnittlinie (4A), dem lokalen Auflagemittel (10) zugewandt, positioniert wird.

2. Verfahren nach Anspruch 1, wobei das Brechen durch ein weiches Förderband (22) der Glasscheibe hindurch realisiert wird.

3. Verfahren nach Anspruch 1 oder 2, wobei ein Saugtisch für das ebene Auflagemittel verwendet wird (8), wobei der Saugtisch während des Schritts des Brechens oder des Schneidens die Glasscheibe (4) durch Ansaugung der oberen Fläche der Glasscheibe trägt.

4. Verfahren nach einem der vorstehenden Ansprüche, wobei das lokale Auflagemittel (10) zum Rollen auf der Glasscheibe (4) rollend montiert ist.

5. Verfahren nach einem der vorstehenden Ansprüche, wobei das lokale Auflagemittel (10) eine Kugel oder eine vorzugsweise abgerundete Laufrolle ist.

6. Verfahren nach einem der vorstehenden Ansprüche, wobei das lokale Auflagemittel (10) mit einer in Abhängigkeit des lokalen Krümmungsradius der zu schneidenden Form gewählten Auflagekraft aufgebracht wird.

7. Verfahren nach einem der vorstehenden Ansprüche, wobei das lokale Auflagemittel (10) in kontinuierlicher Auflage entlang der Schnittlinie (2) aufgebracht wird.

8. Verfahren nach einem der vorstehenden Ansprüche, wobei das lokale Auflagemittel (10) mit einer mindestens eine periodische Komponente aufweisenden Kraft aufgebracht wird.

9. Verfahren nach einem der vorstehenden Ansprüche, wobei das Verfahren zum Schneiden von mindestens zwei komplexen, verschachtelten und/oder tangentialen Formen in derselben Glasscheibe verwendet wird.

10. Verfahren zum Herstellen einer Vielzahl von Verglasungselementen komplexer Form anhand einer rechteckigen, großflächigen Floatglasscheibe mit mindestens einer Abmessung, die einer Größe des Bands des Floatglases entspricht, anhand dessen es produziert wird, unter Verwendung des Verfahrens nach einem der vorstehenden Ansprüche, um mindestens einen Teil der Verglasungselemente zu schneiden.

11. Verfahren nach dem vorstehenden Anspruch, umfassend:
- einen Schritt des Markierens mindestens einer Schnittlinie, entsprechend mindestens einem Rand, der ausgestaltet ist, um an einer ersten Schneidestation der Glasscheibe Verglasungselemente zu gestalten,
- einen ersten Schritt des Brechens,
- einen Schritt des Markierens mindestens einer Schnittlinie, entsprechend mindestens einem anderen Rand, der ausgestaltet ist, an einer zweiten Schneidestation Verglasungselemente zu gestalten;
- einen zweiten Schritt des Brechens.

12. Verfahren nach Anspruch 10, umfassend:
- das Markieren von Schnittlinien, die der Gesamtheit von Rändern entsprechen, die ausgestaltet sind, um an einer ersten Schneidestation Verglasungselemente zu gestalten,
- einen Schritt des Brechens der Ränder, die zum Bearbeiten ausgestaltet sind.

13. Maschine zum Brechen einer komplexen Form in einer Glasscheibe (4), umfassend:
- ein Schnittwerkzeug (6) und automatische Verschiebungsmittel des Werkzeugs zum Realisieren einer Schnittlinie senkrecht zu der Oberfläche des Glases auf einer ersten Fläche einer Glasscheibe;
- ein lokales Auflagemittel (10) und automatische Verschiebungsmittel des lokalen Auflagemittels und/oder der Glasscheibe relativ zueinander, wobei die Maschine zum Auftragen des lokalen Auflagemittels gegen die der ersten Fläche der Glasscheibe gegenüberliegenden Fläche konfiguriert ist, und um es gegenüber und entlang der Schnittlinie auf eine Weise zu verschieben, um die komplexe Form zu brechen,
wobei die Maschine **dadurch gekennzeichnet ist, dass** sie auf eine Art konfiguriert ist, dass die Realisierung der Schnittlinie und der Schritt des Brechens ohne dazwischenliegendes Umdrehen der Glasscheibe realisiert werden, und dadurch, dass sie ferner ein ebenes Auflagemittel (8) umfasst, das angepasst ist, um während des Schritts des Brechens gegen die erste Fläche der Glasscheibe in Bezug auf das lokale Auflagemittel positioniert zu werden.

## Claims

1. A method for breaking out a complex shape from a sheet of glass (4), comprising:
- a step of tracing a score line (2) on the surface of the glass, using a scoring tool (6);
- a step of breaking out using a local pressure means (10) applied on the opposite face (4B) and opposite the score line (2), the local pressure means (10) being moved and pressed along the score line (2) on said opposite face (4B),
the method being **characterized in that** the tracing step and the breaking-out step are performed without turning the sheet of glass over in between and **in that** a planar-support means (8) is positioned on the side of the score line (4A), facing the local pressure means (10) during the breaking-out step.

2. The method as claimed in claim 1, wherein breaking out is performed through a soft conveyor belt (22) that conveys the sheet of glass.

3. The method as claimed in claim 1 or 2, using a suction table as a planar-support means (8), the suction table supporting the sheet of glass (4) by suction on the top face of the sheet of glass during the breaking-out or scoring step.

4. The method as claimed in any one of the preceding claims, in which the local pressure means (10) is mounted so that it can roll so as to roll along the sheet of glass (4).

5. The method as claimed in any one of the preceding claims, in which the local pressure means (10) is a ball or a roller, preferably rounded.

6. The method as claimed in any one of the preceding claims, in which the local pressure means (10) is applied with a pressing force that is chosen according to the local radius of curvature of the shape that is to be cut out.

7. The method as claimed in any one of the preceding claims, in which the local pressure means (10) is pressed continuously along the score line (2).

8. The method as claimed in any one of the preceding claims, in which the local pressure means (10) is pressed with a force that has at least one periodic component.

9. The method as claimed in any one of the preceding claims, in which the method is used to cut at least two imbricated and/or tangential complex shapes from the same sheet of glass.

10. A method for manufacturing a plurality of glazings of complex shape from a large-sized rectangular sheet of float glass having at least one dimension corresponding to the width of the ribbon of float glass from which it is produced, using the method as claimed in any one of the preceding claims to cut out at least part of said glazings.

11. The method as claimed in the preceding claim, comprising:
- on a first workstation for scoring said sheet of glass, a step of tracing at least one score line corresponding to at least one ready to shape edge of the glazings,
- a first breaking-out step,
- on a second scoring workstation, a step of tracing at least one score line corresponding to at least one other ready to shape edge of the glazings;
- a second breaking-out step.

12. The method as claimed in claim 10, comprising:
- on a first scoring workstation, tracing score lines corresponding to all of the ready to shape edges of the glazings,
- a step of breaking out said ready to shape edges.

13. A machine for breaking out a complex shape from a sheet of glass (4), comprising:
- a scoring tool (6) and means for automatically moving said tool in such a way as to create a score line perpendicular to the surface of the glass on a first face of a sheet of glass;
- a local pressure means (10) and means for automatically moving the local pressure means and/or the sheet of glass relative to the other, the machine being configured to press the local pressure means against the opposite face to the first face of the sheet of glass and move it opposite and along the score line so as to break out the complex shape,
the machine being **characterized in that** it is configured so that the tracing step and the breaking-out step are performed without turning the sheet of glass over in between, and **in that** it further comprises a planar-support means (8) adapted to be positioned against said first face of the sheet of glass, opposite the local pressure means, during the breaking-out step.
